# FASCICULE DE BREVET EUROPEEN

(11) **EP 4 466 320 B1**
(45) Date de publication et mention de la délivrance du brevet: **10.09.2025**
(21) Numéro de dépôt: 23701104.4
(22) Date de dépôt: 18.01.2023
(51) Int. Cl.: C09D 129/14, E04B 1/66

(54) **COMPOSITION POUR SYSTÈME D'ÉTANCHÉITÉ LIQUIDE**
ZUSAMMENSETZUNG FÜR FLÜSSIGE ABDICHTUNGSSYSTEME
COMPOSITION FOR LIQUID WATERPROOFING SYSTEM

(30) Priorité: 19.01.2022 FR 2200459
(43) Date de publication de la demande: 27.11.2024
(73) Titulaire: Saint-Gobain Weber France, 94370 Sucy en Brie (FR)
(72) Inventeur: TEULERE, Coralie, 93303 AUBERVILLIERS CEDEX (FR); LACOMBE, Jérémie, 93303 AUBERVILLIERS CEDEX (FR); ROUABAH, Icham, 93303 AUBERVILLIERS CEDEX (FR)
(74) Mandataire: Saint-Gobain Recherche
(86) Numéro de dépôt international: PCT/EP2023/051130
(87) Numéro de publication internationale: WO 2023/139123

(56) Documents cités:
- EP-A1- 0 326 976
- EP-A1- 3 269 777
- WO-A2-2008/063411
- US-A1- 2008 064 800

## Description

L'invention se rapporte au domaine de la construction. Elle concerne plus particulièrement l'obtention de membranes d'étanchéité pour le bâtiment.

L'étanchéité à l'eau des toitures, terrasses, balcons, pièces humides ou façades est essentielle pour assurer la pérennité des constructions.

Pour ce faire, de nombreux systèmes d'étanchéité ont été développés. On peut citer notamment les membranes bitumineuses et les membranes synthétiques thermoplastiques ou vulcanisées qui sont assemblées par soudure, les revêtements en asphalte coulé à chaud ou encore les systèmes appelés dans la technique « systèmes d'étanchéité liquide » (SEL).

Ces derniers sont constitués de matériaux à base de résines polymériques mis en œuvre en une ou plusieurs couche(s) par projection ou par application au rouleau, à la brosse ou à la raclette. Différents types de résines sont utilisées, en particulier des polyesters, des acryliques, des bitumes au néoprène, ou encore des résines polyuréthanes. Très durables et faciles à appliquer, ces systèmes autorisent généralement la circulation des piétons directement après leur séchage, éliminant le besoin d'une protection lourde.

EP 3269777 Al et EP 0326976 Al décrivent des compositions pour membranes d'étanchéité comprenant du PVB plastifié, éventuellement recyclé, un bitume modifié et du carbonate de calcium.

L'invention vise à proposer de nouvelles membranes d'étanchéité qui soient aussi performantes et faciles d'emploi que les membranes à base de résines polyuréthanes et qui présentent de meilleures performances, notamment en termes de propriétés mécaniques, résistance à l'eau et durabilité que les membranes à base de résines acryliques actuellement utilisées. Un autre but de l'invention est de proposer des membranes d'étanchéité à plus faible empreinte carbone.

A cet effet, l'invention a pour objet une composition pour système d'étanchéité liquide qui est une dispersion aqueuse comprenant de l'eau, 5 à 50% en poids de particules de résine à base de poly(acétal de vinyle), un plastifiant, un émulsifiant, 5 à 80% en poids de charges et 0 à 20% en poids de pigments, les pourcentages massiques étant exprimés sur le poids total de la composition.

L'invention a aussi pour objet un procédé d'étanchéification d'une toiture, d'une terrasse, d'un balcon, d'une pièce humide ou d'une façade comprenant l'application, sur un substrat de ladite toiture, terrasse, balcon, pièce humide ou façade, d'une telle composition pour former une membrane, puis le séchage de ladite membrane pour obtenir une membrane sèche ayant une épaisseur allant de 0,1 à 2,0 mm.

L'invention a encore pour objet l'utilisation d'une membrane obtenue par application et séchage d'une composition selon l'invention comme membrane d'étanchéité à l'eau. L'application est notamment réalisée sur un substrat de toiture, de terrasse, de balcon, de pièce humide ou de façade.

Les inventeurs ont pu mettre en évidence que les formulations revendiquées présentaient de très bonnes performances mécaniques, un séchage rapide, une absorption d'eau très faible et une bonne résistance au vieillissement.

De préférence, la résine à base de poly(acétal de vinyle) est à base de poly(butyral de vinyle), aussi appelé PVB.

De préférence, la résine à base de poly(acétal de vinyle), notamment à base de poly(butyral de vinyle) est constituée de poly(acétal de vinyle), notamment de poly(butyral de vinyle).

De préférence, la résine à base de poly(acétal de vinyle), notamment de poly(butyral de vinyle), comprend des fonctions résiduelles alcool et acétate. Ces fonctions résiduelles proviennent du procédé de fabrication de la résine, qui se fait généralement par hydrolyse de poly(acétate de vinyle) en poly(alcool vinylique) puis acétalisation de ce dernier. Comme expliqué plus en détail dans la suite du présent texte, la présence de fonctions alcool permet de réticuler la résine et d'en améliorer ses propriétés.

La résine à base de poly(butyral de vinyle) est avantageusement issue du recyclage de vitrages feuilletés. Ces derniers utilisent en effet du PVB comme intercalaire de feuilletage entre deux feuilles de verre. L'utilisation de matières recyclées permet de réduire l'empreinte carbone du système d'étanchéité liquide.

De préférence, la teneur pondérale en résine à base de poly(acétal de vinyle), notamment à base de poly(butyral de vinyle) dans la composition est comprise entre 7 et 48%, notamment entre 10 et 45%, voire entre 15 et 40% et même entre 20 et 35%.

La teneur pondérale en résine correspond au pourcentage massique de résine en extrait sec dans la composition, donc au poids de résine rapporté au poids total de composition. De manière générale, les teneurs des différents constituants de la composition sont données par rapport au poids total de composition.

La composition peut en outre comprendre des particules d'autres résines, notamment choisies parmi les résines styrène-acryliques, les résines styrène-butadiène, les résines acryliques et les mélanges de deux ou plus de ces résines. Dans ce cas, le rapport entre le poids total de ces particules de résines et le poids en particules de résine à base de poly(acétal de vinyle) est de préférence compris entre 0,05 et 3,0, notamment entre 0,1 et 2,0. Selon un autre mode de réalisation la composition ne comprend pas de particules d'autres résines que les résines à base de poly(acétal de vinyle).

Les particules de résine à base de poly(acétal de vinyle) (voire les cas échéant des autres résines décrites ci-avant) présentent de préférence une distribution volumique de taille telle que le d50 est compris entre 50 et 300 nm, notamment entre 100 et 250 nm. La distribution de taille de particules est notamment déterminée par diffraction dynamique de la lumière.

De préférence, le rapport pondéral entre la teneur en plastifiant et la teneur en résine à base de poly(acétal de vinyle) est compris entre 0,1 et 1, notamment entre 0,2 et 0,5.

Le plastifiant est avantageusement choisi parmi les esters de polyéthylène glycol, les adipates, les sebaçates, les phtalates, les esters de benzoate et les mélanges de deux ou plus de ces composés. A titre d'exemples on peut citer le di(2-éthylhexanoate) de tri(éthylène glycol), le di(2-éthylbutyrate) de tri(éthylène glycol), le di(n-heptanoate) de tri(éthylène glycol), le di(n-heptanoate) de tétra(éthylène glycol), l'adipate de bis(2-butoxyéthyle),le sebaçate de dibutyle, le phtalate de dibutyle ou encore le phtalate de dioctyle .

De préférence le rapport pondéral entre la teneur en émulsifiant et la teneur en résine à base de poly(acétal de vinyle) est compris entre 0,001 et 0,05, notamment entre 0,005 et 0,025.

L'émulsifiant est avantageusement choisi parmi les émulsifiants ioniques (cationiques ou anioniques) et les émulsifiants non-ioniques. Les émulsifiants anioniques sont notamment des carboxylates ou des sulfonates. Les carboxylates sont par exemple des sels d'acides gras saturés ou insaturés comme les stéarates, oléates et laurates, des sels de rosine comme par exemple l'oléate de potassium. Les sulfonates sont par exemple des alkyl sulfonates, des aryl sulfonates, des alkyl aryl sulfonates ou encore des esters sulfonatés comme par exemple le dodécylsulfate de sodium. Les émulsifiants non ioniques sont notamment des polyoxyéthylène alkylphenyl éthers.

L'émulsifiant est de préférence anionique. De tels émulsifiants permettent en effet d'obtenir une plus faible prise en eau que les émulsifiants non-ioniques.

La température de transition vitreuse de la composition est de préférence comprise entre 5 et 40°C, notamment entre 10 et 30°C, afin de conserver une bonne flexibilité après séchage, assurant un pontage correct des éventuelles fissures pouvant apparaître sur le substrat. La température de transition vitreuse est notamment mesurée par calorimétrie différentielle à balayage. La température de transition vitreuse peut être modifiée notamment en jouant sur la quantité de plastifiant.

La température minimale de formation de film (appelée généralement par son acronyme « MFFT ») de la composition est de préférence inférieure à 30°C, notamment inférieure à 20°C, voire inférieure à 10°C et même inférieure à 0°C, afin de permettre la formation de film et la coalescence de la membrane à température ambiante dans différentes conditions climatiques. La température minimale de formation de film peut être modifiée notamment en jouant sur la quantité de plastifiant, voire en ajoutant des agents de coalescence.

La teneur pondérale totale en charges est de préférence comprise entre 6 et 70%, notamment entre 7 et 65%, voie entre 8 et 50%, ou encore entre 9 et 40% ou entre 10 et 25%, ou encore entre 11 et 24%.

Les charges sont avantageusement de nature minérale. Les charges sont de préférence choisies parmi le carbonate de calcium, les argiles, le talc, la dolomie, le mica, les sables siliceux, le basalte broyé et les mélanges de deux ou plus de ces composés. Les charges ont de préférence une taille de particules allant de 0,5 à 500 µm, notamment de 1 à 200 µm, mesurée par granulométrie laser.

La teneur pondérale totale en pigments est de préférence comprise entre 1 et 20%, notamment entre 2 et 10%.

Les pigments sont de préférence choisis parmi les pigments inorganiques (par exemple le dioxyde de titane ou l'oxyde de fer), les pigments organiques (par exemple le noir de carbone), et les mélanges de deux ou plus de ces composés.

De préférence, la composition comprend en outre un agent de réticulation.

Le rapport pondéral entre la teneur en agent de réticulation et la teneur en résine à base de poly(acétal de vinyle) est de préférence compris entre 0,001 et 0,10, notamment entre 0,002 et 0,06.

L'agent de réticulation est avantageusement choisi parmi les composés organométalliques solubles dans l'eau, les particules d'oxyde ou d'hydroxyde métallique insolubles dans l'eau et les composés organiques réactifs vis-à-vis de groupements hydroxyles.

Les composés organiques réactifs vis-à-vis de groupements hydroxyles sont notamment des molécules polyfonctionnelles réactives vis-à-vis de groupements hydroxyles, telles que par exemple des poly(acide carboxylique), des polyisocyanates ou encore des polyaldéhydes. On peut notamment citer le glutaraldéhyde ou l'acide citrique.

Les composés organométalliques solubles dans l'eau sont de préférence des complexes de zirconium, de titane, de zinc ou encore de bore. Des exemples de composés organométalliques solubles dans l'eau sont le bis(carbonato-) dihydroxy-zirconate d'ammonium, le bis(lactato-) dihydroxytitanate d'ammonium, le lactate de titane ou encore le triéthanolaminate de titane.

De manière plus préférée, l'agent de réticulation est constitué de particules d'oxyde ou d'hydroxyde métallique insolubles dans l'eau, notamment des oxydes ou des hydroxydes de zinc, de zirconium ou d'aluminium. Les oxydes de zinc sont particulièrement préférés. Ces particules ont de préférence une taille comprise entre 0,5 et 100 µm, notamment entre 1 et 50 µm. La taille de particules est typiquement déterminée par granulométrie laser.

L'agent de réticulation permet de réticuler plusieurs particules de résine, en particulier grâce aux fonctions alcool résiduelles mentionnées précédemment. Il en résulte un séchage légèrement plus rapide et surtout une absorption d'eau plus faible, en particulier après immersion dans l'eau.

La quantité d'eau dans la composition est de préférence comprise entre 10 et 70% en poids, notamment entre 20 et 60% en poids, par rapport au poids total de composition.

De préférence, la composition comprend en outre un ou plusieurs additifs, notamment choisis parmi :
- les agents démoussants (par exemple du type siliconé, fluoro-siliconé, huile minérale, polymères acryliques, vinyliques ),
- les agents de coalescence (par exemple du type glycols comme le propylène glycol ou le diéthylène glycol, éthers de glycols comme le dipropylène glycol de n-butyl éther ou le propylène glycol de méthyl éther acétate, des esters alcools comme le 2,2,4-triméthyl-1,3-pentanediol monoisobutyrate, pyrrolidone comme la N-méthyl-2-pyrrolidone ou N-butyl-2-pyrrolidone),
- les agents rhéologiques (par exemple du type polyuréthane/polyurée, polyacrylique, polyamide, à base d'huile de ricin, ou encore à base d'argiles ou éther de cellulose),
- les agents dispersants (par exemple du type siliconé, polyacrylate, polyéther),
- les agents bactéricides ou algicides (notamment du type isothiazolinone comme par exemple la benzisothiazolinone ou la méthylisothiazolinone, ou de type halogéné).

La teneur pondérale totale en ces additifs est de préférence comprise entre 0,1 et 10%, de préférence entre 0,2 et 5% par rapport au poids total de la composition.

Les agents dispersants sont utiles pour aider à disperser les charges et les pigments. Comme indiqué précédemment, les agents de coalescence permettent si besoin d'ajuster la température minimale de formation de film.

La composition selon l'invention est normalement une composition monocomposant, c'est-à-dire qu'elle ne nécessite pas l'ajout d'une autre composition avant ou après application.

Afin de réaliser l'étanchéification des toitures, terrasses, balcons, pièces humides ou façades, la composition est appliquée sur un substrat desdites toitures, terrasses, balcons, pièces humides ou façades pour former une membrane.

L'application se fait notamment au rouleau, à la brosse ou encore par pulvérisation. Elle peut se faire en plusieurs couches. Dans le cas de pièces humides, la membrane est généralement recouverte de carrelage.

La membrane est ensuite séchée. Le séchage se fait normalement à l'air, de manière naturelle, donc sans chauffage ni soufflage, en une durée allant typiquement de quelques minutes à quelques heures.

La membrane finale peut résulter de l'application de plusieurs couches successives. Son épaisseur sèche est de préférence comprise entre 0,1 et 2,0 mm, notamment entre 0,2 et 1,5 mm.

Le substrat est de préférence en matériau cimentaire, (par exemple en béton, en mortier ou enduit), mais il peut aussi être en pierre (notamment en pierres calcaires), en brique, en terre cuite, en grès ou encore en céramique.

Les exemples qui suivent illustrent l'invention de manière non-limitative.

Plusieurs dispersions (A à E) comprenant une résine, ainsi que des plastifiants et émulsifiants ont été évaluées.

Les dispersions A, B et C sont des dispersions aqueuses à base de PVB, contenant du triéthylèneglycol-bis(2-éthylhexanoate) comme plastifiant et de l'oléate de potassium comme émulsifiant, commercialisées par la société Shark Solutions. La dispersion D est une dispersion aqueuse de polyuréthane, et la dispersion E est une dispersion aqueuse de styrène-acrylate, ces dispersions étant utilisées dans des exemples comparatifs.

Le tableau 1 ci-après indique pour chacune des dispersions le pourcentage d'extrait sec, la taille de particules (d50), le pH, la température de transition vitreuse Tg, la température minimale de formation de film (MFFT) et la charge électrostatique des particules à un pH de 7.

**[Tableaux1]**

| | A | B | C | D | E |
|---|---|---|---|---|---|
| Extrait sec (%) | 45,6 | 46,1 | 47,8 | 44,0 | 59,0 |
| Taille de particules (nm) | 179 | 194 | 174 | 201 | 142 |
| Tg (°C) | 24 | 24 | 24 | -75/63 | 11 |
| MFFT (°C) | < -1 | < -1 | < -1 | < -1 | < -1 |
| Charge (µmol/g) | -75 | -70 | -24 | -252 | -219 |

A ces dispersions aqueuses ont été ajoutés de l'eau, des charges (charge 1 : carbonate de calcium, charge 2 : talc), des pigments (dioxyde de titane), un agent de réticulation - appelé réticulant - sous forme de particules d'oxyde de zinc, des agents démoussants de type siliconé, un agent dispersant de type polyacrylique, un agent rhéologique de type polyuréthane, ainsi qu'un agent de coalescence (propylène glycol).

Les tableaux 2 et 3 ci-après présentent les compositions testées, les teneurs étant exprimées en pourcents par rapport au poids total de composition. Les exemples 1 à 7 sont des exemples selon l'invention, tandis que les exemples C1 et C2 sont des exemples comparatifs.

**[Tableaux2]**

| | 1 | 2 | 3 | 4 | 5 |
|---|---|---|---|---|---|
| Disp. A | 71,2 | 68,4 | - | - | - |
| Disp. B | - | - | 71,2 | 68,8 | - |
| Disp. C | - | - | - | - | 71,2 |
| Eau ajoutée | 7,8 | 8,6 | 7,8 | 8,3 | 7,8 |
| Démoussant | 0,8 | 0,8 | 0,8 | 0,8 | 0,8 |
| Dispersant | 0,5 | 0,5 | 0,5 | 0,5 | 0,5 |
| Pigments | 3,7 | 4,0 | 3,7 | 4,0 | 3,7 |
| Charge 1 | 11,6 | 12,6 | 11,6 | 12,7 | 11,6 |
| Charge 2 | 2,9 | 3,1 | 2,9 | 3,2 | 2,9 |
| Réticulant | 0,9 | 1,0 | 0,9 | 1,0 | 0,9 |
| Agent de rhéologie | 0,3 | 0,6 | 0,5 | 0,4 | 0,5 |
| Agent de coalescence | 0,3 | 0,3 | 0,3 | 0,2 | 0,3 |
| Teneur en résine | 24,7 | 23,7 | 24,1 | 24,9 | 25,9 |
| Teneur en plastifiant | 7,5 | 7,2 | 7,3 | 7,5 | 7,8 |
| Extrait sec | 53,6 | 54,1 | 53,8 | 54,6 | 55,2 |

**[Tableaux3]**

| | 6 | 7 | C1 | C2 |
|---|---|---|---|---|
| Disp. A | 71,5 | - | - | - |
| Disp. B | - | 71,5 | - | - |
| Disp. D | - | - | 71,8 | - |
| Disp. E | - | - | - | 71,8 |
| Eau ajoutée | 7,8 | 7,8 | 7,4 | 7,4 |
| Démoussant | 0,8 | 0,8 | 0,8 | 0,8 |
| Dispersant | 0,5 | 0,5 | 0,5 | 0,5 |
| Pigments | 3,8 | 3,8 | 3,7 | 3,7 |
| Charge 1 | 12,0 | 12,0 | 11,6 | 11,6 |
| Charge 2 | 3,0 | 3,0 | 2,9 | 3,2 |
| Réticulant | - | - | 0,9 | 0,9 |
| Agent de rhéologie | 0,4 | 0,4 | 0,3 | 0,3 |
| Agent de coalescence | 0,2 | 0,2 | 0,1 | 0,1 |
| Teneur en résine | 24,8 | 25,1 | 31,6 | 42,4 |
| Teneur en plastifiant | 7,5 | 7,6 | 0 | 0 |
| Extrait sec | 51,8 | 52,2 | 52,4 | 63,2 |

Des membranes de 0,3 à 0,4 mm d'épaisseur sèche ont ensuite été obtenues après application d'un film d'épaisseur humide 1 mm et séchage pendant 7 jours à 23°C et sous 50% d'humidité relative.

Les tableaux 4 et 5 ci-après indiquent pour chacun des exemples, le temps de séchage d'un film humide de 1 mm d'épaisseur (déterminé à l'aide d'un dispositif appelé « BK drying recorder »), la résistance à la traction (en MPa) et l'élongation à la rupture (en %) (déterminées à l'aide d'un banc de traction à une vitesse de 50 mm/min à 23°C et à 60°C), l'absorption d'eau après 1 et 7 jours (en %) et la perte de masse après 7 jours dans l'eau.

L'absorption d'eau A après 1 ou 7 jours est calculée, à partir de la masse M1 du film après 1 ou 7 jours d'immersion dans l'eau et de la masse M2 du film immergé dans l'eau pendant 1 ou 7 jours puis séché à 50°C pendant 10 heures, selon la formule suivante : A = 100*(M1-M2)/M2.

La résistance à la traction et l'élongation ont également été mesurées après immersion dans l'eau pendant 7 jours, et après vieillissement sous rayonnement UV (7 jours à 110 W/m²). Le caractère collant après traitement à 60°C a en outre été évalué qualitativement.

**[Table] 4**

| | 1 | 2 | 3 | 4 | 5 |
|---|---|---|---|---|---|
| Séchage (min) | 100 | 100 | 100 | 95 | 100 |
| Traction 23°C (MPa) | 9,9 | 10,1 | 10,0 | 8,7 | 11,0 |
| Elongation 23°C (%) | 450 | 520 | 480 | 490 | 390 |
| Absorption 1 jour (%) | 12,2 | 14,9 | 13,9 | 14,2 | 27,5 |
| Absorption 7 jours (%) | 7,7 | 10,0 | 9,0 | 8,5 | 23,2 |
| Perte masse(%) | 4,1 | 4,3 | 3,6 | 4,5 | 2,0 |
| Traction 60°C (MPa) | 3,0 | 3,5 | 3,4 | 3,7 | - |
| Elongation 60°C (%) | >1300 | 1210 | >1300 | >1300 | - |
| Collant 60°C | non | non | non | non | non |
| Traction après immersion (MPa) | 5,8 | 5,3 | 5,5 | 5,3 | 3,5 |
| Elongation après immersion (%) | 710 | 710 | 700 | 700 | 740 |
| Traction après UV (MPa) | 13,6 | 12,0 | 12,9 | 12,7 | 11,2 |
| Elongation après UV (%) | 460 | 410 | 420 | 430 | 290 |

**[Tableaux5]**

| | 6 | 7 | C1 | C2 |
|---|---|---|---|---|
| Séchage (min) | 110 | 120 | 100 | 110 |
| Traction 23°C (MPa) | 11,2 | 9,8 | 8,1 | 2,7 |
| Elongation 23°C(%) | 560 | 570 | 1500 | 750 |
| Absorption 1 jour (%) | 20,9 | 18,7 | 11,0 | 11,7 |
| Absorption 7 jours (%) | 11,9 | 12,0 | 15,3 | 25,8 |
| Perte masse(%) | 4,7 | 4,2 | 2,9 | 2,0 |
| Collant 60°C | non | non | non | oui |
| Traction après immersion (MPa) | 3,1 | 3,8 | 5,3 | 0,6 |
| Elongation après immersion (%) | 600 | 620 | 1680 | 1330 |
| Traction après UV (MPa) | - | - | 4,8 | 3,0 |
| Elongation après UV (%) | - | - | 840 | 690 |

On peut déduire de ces différents résultats que les membranes selon l'invention sont généralement meilleures que les membranes à base de résine styrène-acrylique, notamment en termes d'absorption d'eau. Les membranes selon l'invention présentent en outre des performances mécaniques similaires à celles des membranes à base de po-luyréthane, et dans certains cas de meilleures performances en termes d'absorption d'eau, y compris pour de faibles teneurs en résine.

L'ajout d'agent de réticulation permet de réduire le temps de séchage et surtout l'absorption d'eau. L'élongation est légèrement réduite mais reste acceptable pour les applications visées. L'agent de réticulation permet aussi d'améliorer les performances mécaniques (résistance à la traction et élongation) après immersion dans l'eau.

Les membranes selon l'invention sont particulièrement résistantes au vieillissement, et présentent notamment de très bonnes propriétés mécaniques après irradiation aux UV. A haute température, les membranes selon l'invention conservent de bonnes propriétés mécaniques, et ne deviennent pas collantes, contrairement aux membranes à base de styrène-acrylique.

## Revendications

1. Composition pour système d'étanchéité liquide qui est une dispersion aqueuse comprenant : de l'eau, 5 à 50% en poids de particules de résine à base de poly(acétal de vinyle), un plastifiant, un émulsifiant, 5 à 80% en poids de charges et 0 à 20% en poids de pigments, les pourcentages massiques étant exprimés sur le poids total de la composition.

2. Composition selon la revendication précédente, dans laquelle la résine à base de poly(acétal de vinyle) est à base de poly(butyral de vinyle).

3. Composition selon la revendication précédente, dans laquelle la résine à base de poly(butyral de vinyle) comprend des fonctions résiduelles alcool et acétate.

4. Composition selon la revendication précédente, dans laquelle la résine à base de poly(butyral de vinyle) est issue du recyclage de vitrages feuilletés.

5. Composition selon l'une des revendications précédentes, comprenant en outre un agent de réticulation.

6. Composition selon la revendication précédente, dans laquelle le rapport pondéral entre la teneur en agent de réticulation et la teneur en résine à base de poly(acétal de vinyle) est compris entre 0,001 et 0,10, notamment entre 0,002 et 0,06.

7. Composition selon l'une des revendications 5 ou 6, dans laquelle l'agent de réticulation est choisi parmi les composés organométalliques solubles dans l'eau, les particules d'oxyde ou d'hydroxyde métallique insolubles dans l'eau et les composés organiques réactifs vis-à-vis de groupements hydroxyles.

8. Composition selon l'une des revendications précédentes, dans laquelle le rapport pondéral entre la teneur en plastifiant et la teneur en résine à base de poly(acétal de vinyle) est compris entre 0,1 et 1, notamment entre 0,2 et 0,5.

9. Composition selon l'une des revendications précédentes, dans laquelle le rapport pondéral entre la teneur en émulsifiant et la teneur en résine à base de poly(acétal de vinyle) est compris entre 0,001 et 0,05, notamment entre 0,005 et 0,025.

10. Composition selon l'une des revendications précédentes, comprenant en outre des particules d'autres résines, notamment choisies parmi les résines styrène-acryliques, les résines styrène-butadiène, les résines acryliques et les mélanges de deux ou plus de ces résines.

11. Composition selon l'une des revendications précédentes, dans laquelle les charges sont choisies parmi le carbonate de calcium, les argiles, le talc, la dolomie, le mica, les sables siliceux, le basalte broyé et les mélanges de deux ou plus de ces composés.

12. Composition selon l'une des revendications précédentes, dans laquelle la quantité d'eau est comprise entre 10 et 70% en poids, notamment entre 20 et 60% en poids.

13. Procédé d'étanchéification d'une toiture, d'une terrasse, d'un balcon, d'une pièce humide ou d'une façade comprenant l'application, sur un substrat de ladite toiture, terrasse, balcon, pièce humide ou façade, d'une composition selon l'une des revendications précédentes pour former une membrane, puis le séchage de ladite membrane pour obtenir une membrane sèche ayant une épaisseur allant de 0,1 à 2,0 mm.

14. Procédé selon la revendication précédente, dans laquelle le substrat est en matériau cimentaire.

15. Utilisation d'une membrane obtenue par application et séchage d'une composition selon l'une des revendications 1 à 12 comme membrane d'étanchéité à l'eau.

## Patentansprüche

1. Zusammensetzung für ein Flüssigkeitsabdichtungssystem, das eine wässrige Dispersion ist, umfassend: Wasser, zu 5 bis 50 Gewichtsprozent Harzpartikel auf Basis von Poly(vinylacetal), einen Weichmacher, einen Emulgator, zu 5 bis 80 Gewichtsprozent Füllstoffe und zu 0 bis 20 Gewichtsprozent Pigmente, wobei die Massenprozente auf das Gesamtgewicht der Zusammensetzung bezogen sind.

2. Zusammensetzung nach dem vorstehenden Anspruch, wobei das Harz auf Basis von Poly(vinylacetal) auf Basis von Poly(vinylbutyral) ist.

3. Zusammensetzung nach dem vorstehenden Anspruch, wobei das Harz auf Basis von Poly(vinylbutyral) Alkohol- und Acetatrestfunktionen umfasst.

4. Zusammensetzung nach dem vorstehenden Anspruch, wobei das Harz auf Basis von Poly(vinylbutyral) aus dem Recycling von Verbundverglasungen stammt.

5. Zusammensetzung nach einem der vorstehenden Ansprüche, ferner umfassend ein Vernetzungsmittel.

6. Zusammensetzung nach dem vorstehenden Anspruch, wobei das Gewichtsverhältnis zwischen dem Gehalt an Vernetzungsmittel und dem Gehalt an Harz auf Basis von Poly(vinylacetal) zwischen 0,001 und 0,10, insbesondere zwischen 0,002 und 0,06 liegt.

7. Zusammensetzung nach einem der Ansprüche 5 oder 6, wobei das Vernetzungsmittel aus wasserlöslichen organometallischen Verbindungen, wasserunlöslichen Metalloxid- oder -hydroxidpartikeln und mit Hydroxylgruppen reaktiven organischen Verbindungen ausgewählt ist.

8. Zusammensetzung nach einem der vorstehenden Ansprüche, wobei das Gewichtsverhältnis zwischen dem Gehalt an Weichmacher und dem Gehalt an Poly(vinylacetal)harz zwischen 0,1 und 1, insbesondere zwischen 0,2 und 0,5 liegt.

9. Zusammensetzung nach einem der vorstehenden Ansprüche, wobei das Gewichtsverhältnis zwischen dem Gehalt an Emulgator und dem Gehalt an Poly(vinylacetal)harz zwischen 0,001 und 0,05, insbesondere zwischen 0,005 und 0,025 liegt.

10. Zusammensetzung nach einem der vorstehenden Ansprüche, ferner umfassend Partikel aus anderen Harzen, insbesondere ausgewählt aus Styrol-Acryl-Harzen, Styrol-Butadien-Harzen, Acrylharzen und Mischungen aus zwei oder mehreren dieser Harze.

11. Zusammensetzung nach einem der vorstehenden Ansprüche, wobei die Füllstoffe aus Calciumcarbonat, Tonen, Talk, Dolomit, Glimmer, Quarzsanden, gemahlenem Basalt und Mischungen aus zwei oder mehreren dieser Verbindungen ausgewählt sind.

12. Zusammensetzung nach einem der vorstehenden Ansprüche, wobei die Wassermenge zwischen 10 und 70 Gewichtsprozent, insbesondere zwischen 20 und 60 Gewichtsprozent liegt.

13. Verfahren zum Abdichten eines Dachs, einer Terrasse, eines Balkons, eines Feuchtraums oder einer Fassade, umfassend das Auftragen einer Zusammensetzung nach einem der vorstehenden Ansprüche auf ein Substrat des Dachs, der Terrasse, des Balkons, des Feuchtraums oder der Fassade zum Ausbilden einer Membran, dann das Trocknen der Membran zum Erhalten einer trockenen Membran, die eine Dicke im Bereich von 0,1 bis 2,0 mm aufweist.

14. Verfahren nach dem vorstehenden Anspruch, wobei das Substrat aus zementartigem Material besteht.

15. Verwendung einer Membran, die durch Auftragen und Trocknen einer Zusammensetzung nach einem der Ansprüche 1 bis 12 erhalten wird, als wasserdichte Membran.

## Claims

1. A composition for a liquid sealing system, said composition being an aqueous dispersion comprising: water, 5 to 50% by weight of polyvinyl acetal-based resin particles, a plasticizer, an emulsifier, 5 to 80% by weight of fillers, and 0 to 20% by weight of pigments,
percentages by weight being given relative to the total weight of the composition.

2. The composition according to the preceding claim, wherein the polyvinyl acetal-based resin is polyvinyl butyral-based.

3. The composition according to the preceding claim, wherein the polyvinyl butyral-based resin comprises residual alcohol and acetate functions.

4. The composition according to the preceding claim, wherein the polyvinyl butyral-based resin is derived from the recycling of laminated glass.

5. The composition according to one of the preceding claims, further comprising a cross-linking agent.

6. The composition according to the preceding claim, wherein the weight ratio between the cross-linking agent content and the polyvinyl acetal-based resin content is between 0.001 and 0.10, in particular between 0.002 and 0.06.

7. The composition according to one of claims 5 or 6, wherein the cross-linking agent is chosen from water-soluble organometallic compounds, water-insoluble metal oxide or hydroxide particles and organic compounds reactive towards hydroxyl groups.

8. The composition according to one of the preceding claims, wherein the weight ratio between the plasticizer content and the polyvinyl acetal-based resin content is between 0.1 and 1, in particular between 0.2 and 0.5.

9. The composition according to one of the preceding claims, wherein the weight ratio between the emulsifier content and the polyvinyl acetal-based resin content is between 0.001 and 0.05, in particular between 0.005 and 0.025.

10. The composition according to one of the preceding claims, further comprising particles of other resins, in particular selected from styrene-acrylic resins, styrenebutadiene resins, acrylic resins and mixtures of two or more of these resins.

11. The composition according to one of the preceding claims, wherein the fillers are chosen from calcium carbonate, clays, talc, dolomite, mica, silica sands, ground basalt and mixtures of two or more of these compounds.

12. The composition according to one of the preceding claims, wherein the amount of water is between 10 and 70% by weight, especially between 20 and 60% by weight.

13. A method for sealing a roof, terrace, balcony, wet room or facade, comprising applying, to a substrate of said roof, terrace, balcony, wet room or facade, a composition according to one of the preceding claims to form a membrane, then drying said membrane to obtain a dry membrane having a thickness ranging from 0.1 to 2.0 mm.

14. The method according to the preceding claim, wherein the substrate is made of cementitious material.

15. A use of a membrane obtained by applying and drying a composition according to one of claims 1 to 12 as a waterproofing membrane.
